# EUROPÄISCHE PATENTSCHRIFT

(11) **EP 2 767 861 B1**
(45) Veröffentlichungstag und Bekanntmachung des Hinweises auf die Patenterteilung: **22.11.2017**
(21) Anmeldenummer: 14153970.0
(22) Anmeldetag: 05.02.2014
(51) Int. Cl.: G02C 1/06

(54) **Brille mit auswechselbarem Brillenglas**
Spectacles with interchangeable spectacle lens
Lunette avec verre de lunettes interchangeable

(30) Priorität: 13.02.2013 DE 102013202336
(43) Veröffentlichungstag der Anmeldung: 20.08.2014
(73) Patentinhaber: Uvex Sports GmbH & Co. KG, 90766 Fürth (DE)
(72) Erfinder: Schmidt, Bernhard, 90513 Zirndorf (DE)
(74) Vertreter: Rau, Schneck & Hübner Patentanwälte Rechtsanwälte PartGmbB

(56) Entgegenhaltungen:
- WO-A1-2012/099631
- WO-A2-03/040809
- DE-U1- 20 212 399
- US-A- 5 035 498
- US-A1- 2009 135 370

## Beschreibung

Die Erfindung betrifft eine Brille, insbesondere Sportbrille, mit auswechselbarem Brillenglas.

Derartige Brillen sind grundsätzlich bekannt. Die Brillengläser bekannter Brillen lassen sich auswechseln, um zum Beispiel beschädigte Brillengläser zu ersetzen oder um eine Tönung der Brillengläser an Umgebungsbedingungen oder an den persönlichen Geschmack eines Benutzers anzupassen. So offenbart die DE 202 12 399 U1 eine Brille mit einem Brillengestell und zwei von dem Brillengestell gehaltenen Brillengläsern. Ein Verriegelungselement hält dabei jeweils ein Brillenglas zusammenwirkend mit dem Rahmenteil formschlüssig fest. Auch die US 5,971,536 A offenbart eine Brille mit auswechselbaren Brillengläsern, die ohne Zuhilfenahme von Werkzeug entnommen und eingesetzt werden können. Hierzu sind Verriegelungselemente vorgesehen, die in einer Verriegelungsposition die Brillengläser zusammen mit dem Brillengestell formschlüssig halten. Ferner offenbaren die WO 2012/100 276 A2, die JP H10-133151 A und die US 6 224 209 B1 jeweils eine Brille mit einem Brillengestell, lösbar gehaltenen Brillengläsern und zwischen einer Verriegelungsposition und einer Freigabeposition verschiebbaren Verriegelungsmitteln zum Halten der Brillengläser. Die US 5 035 498 offenbart eine Brille, wobei eine Brillenschreibe lösbar mit Seitenteilen verbindbar ist. Aus der WO 2012/099 631 A1 ist ein Brillenbefestigungs-System für Schutzhelme bekannt. Außerdem zeigt die WO 03/040 809 A2 eine Brille mit einem Linsenrahmen, der an ein Brillengestell festlegbar ist. Die US 2009/0 135 370 A1 offenbart einen Magnet-Verbindungsmechanismus für Brillenfassungen. Die bekannten Brillenglas-Verriegelungsmechanismen sind konstruktiv aufwendig. Die Montage und Demontage von Brillenglas-Verriegelungselementen bekannter Brillen ist vor allem aufgrund einer Vielzahl von Kleinbauteilen, wie beispielsweise Vorspannelementen in der Form von Federn, Rastkörpern oder Führungselementen, äußerst mühsam und erfordert eine große Handfertigkeit. Darüber hinaus kann es bei häufigen Brillenglaswechseln zu einem Verschleiß der Brillenglas-Verriegelungselemente kommen, was deren Ersatz erfordert.

Es ist eine Aufgabe der vorliegenden Erfindung, eine Brille der eingangs bezeichneten Art bereit zu stellen, mit der ein Wechseln von Brillengläsern weiter vereinfacht wird.

Diese Aufgabe wird durch eine Brille mit den Merkmalen des Anspruchs 1 gelöst. Der Kern der Erfindung liegt darin, dass eine Brille mit einem Brillengestell und mindestens einem von dem Brillengestell mittels eines Verriegelungsmittels lösbar gehaltertem Brillenglas, ein mit dem Verriegelungsmittel zusammenwirkendes Verriegelungs-Gegenmittel aufweist, welches an dem Brillengestell angeordnet ist. Das Verriegelungsmittel, welches relativ zum Brillengestell zwischen einer Brillenglas-Verriegelungsposition und einer Brillenglas-Freigabeposition verschiebbar ist und in der Brillenglas-Verriegelungsposition mit dem Brillenglas zusammenwirkt und dieses an dem Brillengestell hält, weist ebenso wie das Verriegelungs-Gegenmittel ein Magnetelement auf. Das erste Magnetelement des Verriegelungsmittels wechselwirkt dabei mit dem zweiten Magnetelement des Verriegelungs-Gegenmittels. Bei den Magnetelementen kann es sich um magnetische oder magnetisierbare Elemente handeln. Erfindungsgemäß wurde erkannt, dass Brillengläser einer Brille, insbesondere einer Sportbrille, dann besonders einfach und schnell auswechselbar sind, wenn das Verriegelungsmittel und das Verriegelungs-Gegenmittel jeweils wechselwirkende Magnetelemente aufweisen. Das Verriegelungsmittel und das Verriegelungs-Gegenmittel bilden zusammen einen Verriegelungsmechanismus in Form eines Magnetschiebers zum Halten bzw. Freigeben mindestens eines Brillenglases. Zusätzliche Verriegelungs- bzw. Befestigungsmittel für die Brillengläser können dann entfallen. Prinzipiell kann auch eine Brille, die nicht nur ein, z. B. als Schutzscheibe ausgeführtes Brillenglas, sondern zwei Brillengläser aufweist, nur ein Verriegelungsmittel und ein Verriegelungs-Gegenmittel aufweisen, welche zusammenwirkend beide Brillengläser verriegeln. Bevorzugt ist jedoch eine Ausführung einer Brille mit zwei Brillengläsern, bei der jedem Brillenglas genau ein Verriegelungsmittel und ein Verriegelungs-Gegenmittel zugeordnet ist. Bei dieser Ausführungsvariante können die Brillengläser einzeln ausgetauscht werden. Die erfindungsgemäße Brille gewährleistet eine Halterung des Verriegelungsmittels an dem Brillengestell auch in der Brillenglas-Freigabeposition. Es ist bei Überlappung der Magnetelemente in dem Rest-Überlappungsbereich noch eine ausreichende magnetische Wechselwirkung zwischen den Magnetelementen gegeben, um das Verriegelungsmittel ohne zusätzliche Hilfsmittel an dem Brillengestell zu halten. Insbesondere beträgt die Fläche des Rest-Überlappungsbereichs mindestens 30 %, bevorzugt mindestens 40 % und besonders bevorzugt mindestens 60 % der Fläche des Verriegelungs-Überlappungsbereichs. Weiterhin beträgt die Fläche des Rest-Überlappungsbereichs insbesondere höchstens 70 %, bevorzugt höchstens 55 %, besonders bevorzugt höchstens 40 % des Verriegelungs-Überlappungsbereichs. Ein günstiger Wert der Fläche des Rest-Überlappungsbereichs liegt bei etwa 50 % der Fläche der Verriegelungs-Überlappungsbereichs. Der Rest-Überlappungsbereich kann aber prinzipiell auch derart gestaltet sein, dass sich die Magnetelemente nur noch im Bereich derer Außenkanten überlappen.

Eine Brille nach Anspruch 2 gewährleistet eine formschlüssige und damit sichere Halterung des mindestens einen Brillenglases, bzw. der Brillengläser. Das Brillenglas ist vorzugsweise zwischen Brillengestell und Verriegelungsmittel eingeklemmt.

Eine Brille nach Anspruch 3 ermöglicht eine Brillengestaltung mit wenigen Einzelteilen, wobei nur ein Element des Verriegelungsmechanismus, also das Verriegelungsmittel oder das Verriegelungs-Gegenmittel beweglich gestaltet sein braucht. Mittels leichtem Ziehen des Verriegelungsmittels von dem Brillenglas nach Außen in Richtung Brillenbügel durch einen Benutzer ist das Brillenglas freigebbar. Das Brillenglas ist so leicht auswechselbar.

Eine Brille nach Anspruch 4 stellt eine konstruktiv besonders einfache Lösung zur lösbaren Halterung von Brillengläsern dar. Die feste Anordnung des Verriegelungs-Gegenmittels an dem Brillengestell kann beispielsweise durch eine Klebe-, Klemm- oder Rastverbindung verwirklicht sein. Vorteilhafterweise ist das Verriegelungs-Gegenmittel in eine Ausnehmung des Brillengestells eingesetzt und über eine Klebeverbindung mit dem Brillengestell verbunden. Vorzugsweise ist das Verriegelungs-Gegenmittel selbst als Magnetelement ausgebildet. Alternativ ist vorstellbar, dass das Verriegelungs-Gegenmittel ein Tragelement aufweist, von welchem das zweite Magnetelement getragen ist.

Eine Brille nach Anspruch 5 ermöglicht eine wechselseitige Anziehung der Magnetelemente des Verriegelungsmittels und des Verriegelungs-Gegenmittels. Die gegenseitige Wechselwirkung der Magnetelemente ist dabei zumindest so stark, dass das Verriegelungsmittel nur durch eine magnetische Kraftwirkung und ohne weitere Hilfsmittel an dem Brillengestell gehalten werden kann. Die Magnetelemente enthalten vorzugsweise jeweils ein ferromagnetisches Material, insbesondere ein Element der Gruppe aus Eisen, Nickel und Kobalt. Mittels dieser Elemente lassen sich unter Normalbedingungen hohe magnetische Haltekräfte erzielen.

Eine Brille nach Anspruch 6 ermöglicht eine automatische Zurückverlagerung des Verriegelungsmittels in die Brillenglas-Verriegelungsposition nach einem Auswechseln des Brillenglases. Nach dem Auswechseln des Brillenglases kann das Verriegelungsmittel von dem Benutzer losgelassen werden, woraufhin sich das Verriegelungsmittel durch die Rückstellkraft des zweiten Magnetelements auf das erste Magnetelement in die Brillenglas-Verriegelungsposition zurückverlagert. Nach einem Einlegen des neuen Brillenglases und Loslassen des Verriegelungsmittels durch einen Benutzers, verriegelt das Verriegelungsmittel das Brillenglas von selbst.

Eine Brille nach Anspruch 7 ermöglicht zum einen einen konstruktiv besonders einfachen Verriegelungsmechanismus des Brillenglases und zum anderen eine besonders einfache Handhabung desselbigen durch den Benutzer.

Eine Brille nach Anspruch 8 gewährleistet eine stabile und sichere Halterung des Verriegelungsmittels mittels des ersten Magnetelements an dem Brillengestell auf Basis der magnetischen Wechselwirkung zwischen dem ersten Magnetelement und dem zweiten Magnetelement. Die Magnetelemente weisen jeweils einen Durchmesser auf, der im Wesentlichen einem Durchmesser des Verriegelungs-Überlappungsbereichs entspricht. Vorzugsweise entspricht ferner ein Durchmesser des Rest-Überlappungsbereichs im Wesentlichen der Hälfte des Durchmessers der Magnetelemente.

Eine Brille nach Anspruch 9 ermöglicht eine weiter verbesserte, stabile Halterung des Verriegelungsmittels an dem Brillengestell und eine stabile Führung des Verbindungsmittels bei einer Verlagerungsbewegung zwischen der Brillenglas-Verriegelungsposition und der Brillenglas-Freigabeposition.

Eine Brille nach Anspruch 10 ermöglicht eine sichere Halterung und Führung des Verriegelungsmittels an dem Brillengestell mittels einer konstruktiv einfachen Schnappverbindung. Die Schnappverbindung lässt eine lineare Bewegung des Verriegelungsmittels entlang einer Verschieberichtung zu und verhindert gleichzeitig ein ungewolltes Lösen des Verriegelungsmittels von dem Brillengestell.

Eine Brille nach Anspruch 11 ermöglicht ein separates Auswechseln von Brillengläsern in einem Brillengestell. Dies ist insbesondere dann von Bedeutung, wenn nur eines von zwei Brillengläsern ausgewechselt werden muss, beispielsweise durch eine Beschädigung des Brillenglases. Das unbeschädigte Brillenglas kann in diesem Fall in dem Brillengestell belassen werden.

Eine Brille nach Anspruch 12 ermöglicht eine gute Greifbarkeit der Verriegelungsmittel durch den Benutzer.

Nachfolgend wird unter Bezugnahme auf die beigefügte Zeichnung ein Ausführungsbeispiel der Erfindung beschrieben. Dabei zeigen:
- Fig. 1: eine perspektivische Ansicht einer Brille, wobei sich ein Verriegelungsmittel in einer Brillenglas-Verriegelungsposition befindet;
- Fig. 2: eine zu Fig. 1 ähnliche perspektivische Ansicht der Brille mit dem Verriegelungsmittel in einer Brillenglas-Freigabeposition;
- Fig. 3: die Brille gemäß Fig. 1 und Fig. 2, bei der aus Gründen der Übersichtlichkeit das Verriegelungsmittel weggelassen ist;
- Fig. 4: eine isolierte vergrößerte Darstellung von Magnetelementen des Verriegelungsmittels und eines Verriegelungs-Gegenmittels;
- Fig. 5: eine Stirnansicht einer alternativen Ausführungsvariante eines Verriegelungsmittels in einer isolierten Darstellung;
- Fig. 6: eine Ansicht des Verriegelungsmittels gemäß Fig. 5 aus Blickrichtung VI in Fig. 5;
- Fig. 7: eine zu Fig. 3 ähnliche Darstellung eines Brillengestells gemäß der alternativen Ausführungsvariante, bei der aus Gründen der Übersichtlichkeit das Verriegelungsmittel weggelassen ist; und
- Fig. 8: eine Schnittdarstellung des Brillengestells gemäß der Schnittlinie VIII-VIII in Fig. 7 mit dem gestrichelt angedeuteten Verriegelungsmittel gemäß Fig. 5 und Fig. 6 in einer Brillenglas-Freigabeposition.

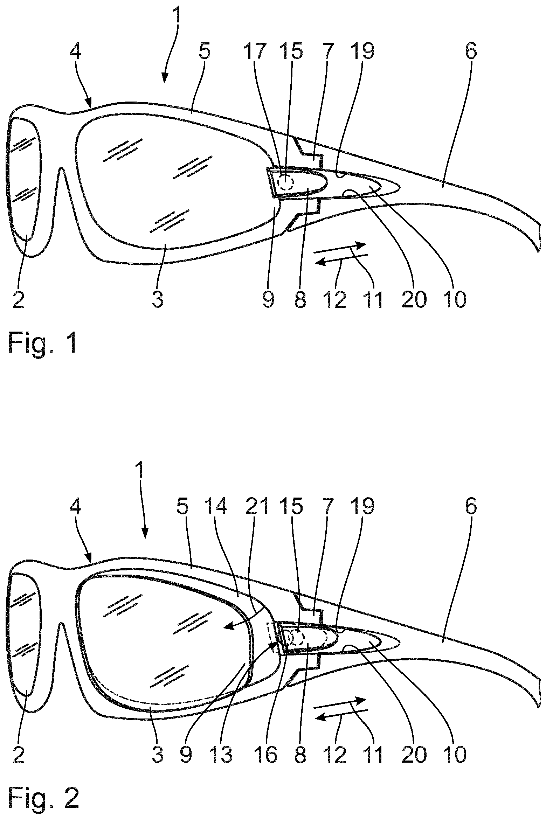

Einander entsprechende Teile sind in den Fig. 1 bis Fig. 8 mit denselben Bezugszeichen versehen. Auch Einzelheiten der im Folgenden näher erläuterten Ausführungsbeispiele können für sich genommen eine Erfindung darstellen oder Teil eines Erfindungsgedankens sein.

In den Fig. 1 bis Fig. 4 wird eine bevorzugte Ausführungsvariante einer Brille 1 mit auswechselbaren Brillengläsern 2, 3 dargestellt. Bei der Brille 1 handelt es sich vorzugsweise um eine Sport- oder Freizeitbrille. Die Brille 1 umfasst ein Brillengestell 4 mit einem Brillengestellmittelteil 5 und zwei Brillenbügeln 6, von denen in der Zeichnung nur einer sichtbar ist. Die Brillenbügel 6 sind mit dem Brillengestellmittelteil 5 in bekannter Weise über Scharniere 7 schwenkbar verbunden.

Die Brillengläser 2, 3 sind von dem Brillengestellmittelteil 5 lösbar gehaltert. Zum Halten der Brillengläser 2, 3 an dem Brillengestellmittelteil 5 weist die Brille 1 für jedes Brillenglas 2, 3 ein Verriegelungsmittel 8 auf. Die Verriegelungsmittel 8 sind seitlich des Brillengestellmittelteils 5 im Bereich eines Übergangs des Brillengestellmittelteils 5 hin jeweils zu einem Brillenbügel 6 angebracht. In den Fig. 1 bis Fig. 3 ist jeweils nur ein Verriegelungsmittel 8 dargestellt. Die Verriegelungsmittel 8 sind jeweils relativ zum Brillengestell 4 zwischen einer in Fig. 1 gezeigten Brillenglas-Verriegelungsposition und einer in Fig. 2 gezeigten Brillenglas-Freigabeposition verschiebbar. In der Brillenglas-Verriegelungsposition wirken die Verriegelungsmittel 8 jeweils mit den Brillengläsern 2, 3 zusammen und halten die Brillengläser 2, 3 an dem Brillengestellmittelteil 5.

In der Brillenglas-Verriegelungsposition gemäß Fig. 1 steht das Verriegelungsmittel 8 bereichsweise vom Brillengestellmittelteil 5 her über die in das Brillengestellmittelteil 5 eingesetzten Brillengläser 2, 3 über, sodass die Brillengläser 2, 3 durch das Zusammenwirken einer nicht dargestellten umlaufenden Nut im Brillengestellmittelteil 5 mit dem überstehenden Abschnitt des Verriegelungsmittels 8 formschlüssig in der in Fig. 1 gezeigten Brillenglas-Verriegelungsposition gehalten sind. Wie Fig. 1 zu entnehmen greifen die Verriegelungsmittel 8 jeweils im Bereich eines benachbart zu den Brillenbügeln 6 verlaufenden seitlichen Endabschnitts 9 der Brillengläser 2, 3 an diesen an.

In der in Fig. 2 gezeigten Brillenglas-Freigabeposition geben die Verriegelungsmittel 8 die Brillengläser 2, 3 jeweils derart frei, dass die Brillengläser 2, 3 aus dem Brillengestell 4 entnehmbar sind. In der Brillenglas-Freigabeposition ist das Verriegelungsmittel 8 gegenüber der Brillenglas-Verriegelungsposition derart verlagert, dass das Verriegelungsmittel 8 jeweils nicht über das betreffende Brillenglas 2, 3 übersteht. Den notwendigen Spielraum für eine Verlagerungsbewegung des Verriegelungsmittels 8 von der Brillenglas-Verriegelungsposition in die Brillenglas-Freigabeposition ermöglicht vorzugsweise eine Aussparung 10 in den Brillenbügeln 6. Die Verlagerungsbewegung des Verriegelungsmittels 8 von der Brillenglas-Verriegelungsposition in die Brillenglas-Freigabeposition ist in den Fig. 1 und Fig. 2 durch einen Richtungspfeil 11 und die Verlagerungsbewegung des Verriegelungsmittels 8 von der Brillenglas-Freigabeposition in die Brillenglas-Verriegelungsposition durch einen Richtungspfeil 12 veranschaulicht. Die Richtungspfeile 11, 12 geben Verschieberichtungen des Verriegelungsmittels 8 graphisch wieder. Ein Verlagerungshub der Verlagerungsbewegung ist durch die in Fig. 2 zusätzlich gestrichelt angedeutete Brillenglas-Verriegelungsposition des Verriegelungsmittels 8 veranschaulicht.

Zum formschlüssigen Halten der Brillengläser 2, 3 und zum Freigeben der Brillengläser 2, 3 wirken die Verriegelungsmittel 8 jeweils mit einem Verriegelungs-Gegenmittel 13 zusammen. Das Verriegelungsmittel 8 und das Verriegelungs-Gegenmittel 13 bilden zusammen einen Verriegelungsmechanismus. Die Verriegelungs-Gegenmittel 13 sind beidseits an dem Brillengestellmittelteil 5 in einem Bereich zwischen einer Brillenglasausnehmung 14 bzw. dem jeweiligen Brillenglas 2, 3 und den Brillenbügeln 6 angeordnet, also ebenso wie die Verriegelungsmittel 8 im Bereich des Übergangs des Brillengestellmittelteils 5 hin zu dem jeweiligen Brillenbügel 6. Das Verriegelungsmittel 8 und das Verriegelungs-Gegenmittel 13 wirken an beiden Bereichen beidseits des Brillengestellmittelteils 5 auf die gleiche Art und Weise zusammen. Daher wird nachfolgend exemplarisch nur das Zusammenwirken von Verriegelungsmittel 8 und Verriegelungs-Gegenmittel 13 im Bereich zwischen dem zweiten Brillenglas 3 und Brillenbügel 6 im Detail beschrieben.

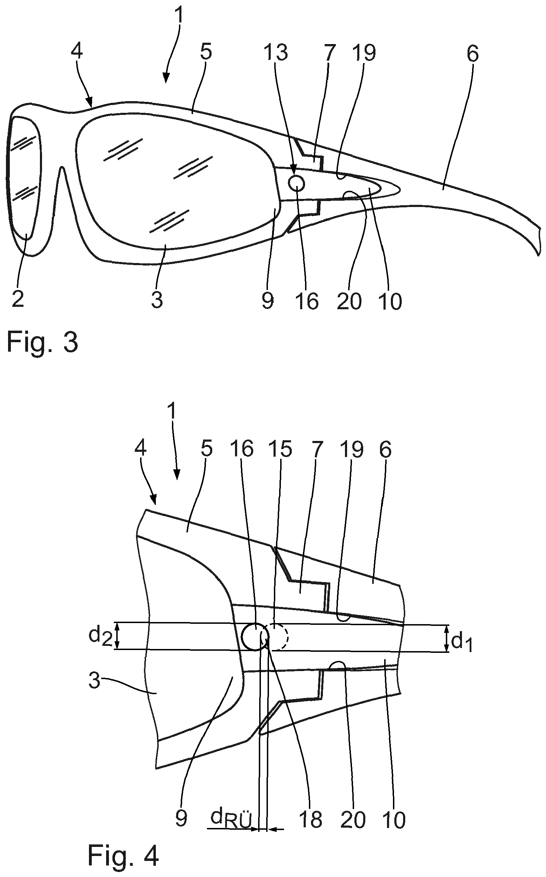

Das Verriegelungsmittel 8 und das Verriegelungs-Gegenmittel 13 weisen jeweils ein Magnetelement 15, 16 auf, wobei das erste Magnetelement 15 des Verriegelungsmittels 8 mit dem zweiten Magnetelement 16 des Verriegelungs-Gegenmittels 13 wechselwirkt. Das Verriegelungs-Gegenmittel 13 ist besonders anschaulich in Fig. 3 ersichtlich, da in Fig. 3 aus Gründen der Übersichtlichkeit das Verriegelungsmittel 8 weggelassen ist. Wie Fig. 3 zu entnehmen, ist in der gezeigten Ausführungsvariante der Brille 1 das Verriegelungs-Gegenmittel 13 selbst als Magnetelement 16 ausgebildet. Alternativ ist es auch vorstellbar, dass das Verriegelungs-Gegenmittel 13 ein Tragelement aufweist, auf welchem das Magnetelement 16 angeordnet ist.

Das erste Magnetelement 15 ist vorzugsweise auf einer dem Brillengestell 5 zugewandten Innenseite des Verriegelungsmittels 8 angeordnet. Das erste Magnetelement 15 des Verriegelungsmittels 8 ist daher in den Fig. 1 und Fig. 2 nur gestrichelt angedeutet, das es in der gezeigten Ausführungsvariante für einen Betrachter der Fig. 1 und Fig. 2 nicht zu erkennen wäre. In der gezeigten Ausführungsvariante ist das erste Magnetelement 15 in einer Ausnehmung der dem Brillengestellmittelteil 5 zugewandten Innenseite des Verriegelungsmittels 8 angeordnet, insbesondere in die Ausnehmung eingeklebt oder auf eine andere angemessene Weise fest in die Ausnehmung des Verriegelungsmittels 8 eingesetzt. Alternativ ist es auch vorstellbar, dass das erste Magnetelement 16 das Verriegelungsmittel 8 vollständig durchsetzt. Zu diesem Zweck wäre in dem Verriegelungsmittel 8 ein Durchbruch vorzusehen, in welchen das erste Magnetelement 8 formschlüssig eingesetzt wäre.

Das Verriegelungs-Gegenmittel 13 ist vorzugsweise in eine Ausnehmung des Brillengestellmittelteils 5 eingesetzt und mit dem Brillengestellmittelteil 5 verklebt. Es ist alternativ auch möglich, das Verriegelungs-Gegenmittel 13 in Form des Magnetelements 16 formschlüssig in die Ausnehmung des Brillengestellmittelteils 5 einzusetzen und auf eine Klebeverbindung zu verzichten.

Das Verriegelungsmittel 8 und das Verriegelungs-Gegenmittel 13 sind relativ zueinander verschiebbar, wobei das Verriegelungs-Gegenmittel 13 fest an dem Brillengestellmittelteil 5 des Brillengestells 4 angeordnet ist. Die miteinander wechselwirkenden Magnetelemente 15, 16 sind vorzugsweise kreisförmig ausgebildet. Die Magnetelemente 15, 16 sind in Fig. 4 in einer vergrößerten Ansicht dargestellt, wobei in Fig. 4 das erste Magnetelement 15 gestrichelt angedeutet ist. Die Magnetelemente 15, 16 enthalten zur Erzeugung einer magnetischen Wechselwirkung jeweils ferromagnetisches Material, bei dem es sich vorzugsweise um Eisen, Nickel oder Kobalt handelt. Die genannten Elemente weisen bei Raumtemperatur besonders gute ferromagnetische Eigenschaften auf. Vorzugsweise ist eines der Magnetelemente 15, 16 als Permanentmagnet ausgebildet. Zur Erzeugung einer magnetischen Wechselwirkung zwischen den Magnetelementen 15, 16 ist das jeweils andere Magnetelement dann nicht magnetisiert.

In der in Fig. 1 dargestellten Brillenglas-Verriegelungsposition überlappt das erste Magnetelement 15 das zweite Magnetelement 16 in einem Verriegelungs-Überlappungsbereich 17. In der gezeigten Ausführungsvariante überlappt in der Brillenglas-Verriegelungsposition das erste Magnetelement 15 das zweite Magnetelement 16 vollständig. Aus Sicht eines Betrachters der Fig. 1 fluchten die Magnetelemente 15, 16 miteinander. Alternativ ist in der Brillenglas-Verriegelungsposition auch eine lediglich abschnittsweise Überlappung möglich. Für diese Ausführungsvariante ist die magnetische Kraftwirkung zwischen den Magnetelementen 15, 16 höher auszulegen.

In der Ausführungsvariante gemäß den Fig. 1 bis Fig. 4 beträgt ein Durchmesser d₁ bzw. d₂ der kreisförmigen Magnetelemente 15, 16 jeweils 8 mm. Abweichende Abmessungen sind grundsätzlich vorstellbar. Eine magnetische Anziehungskraft der Magnetelemente 15, 16 ist auf den jeweiligen Magnetdurchmesser d₁ bzw. d₂ anzupassen. In der in den Fig. 2 und Fig. 4 gezeigten Brillenglas-Freigabeposition überlappt das erste Magnetelement 15 das zweite Magnetelement 16 in einem Rest-Überlappungsbereich 18. Ein Durchmesser d_{RÜ} des Rest-Überlappungsbereich 18 ist kleiner als ein Durchmesser d_{VÜ} des Verriegelungs-Überlappungsbereichs 17. Der Durchmesser d_{VÜ} ist dabei insbesondere im Wesentlichen gleich der Ausdehnung des Rest-Überlappungsbereichs 18 in der Richtung, in der das Verrieglungsmittel 8 und das Verriegelungs-Gegenmittel 13 relativ zueinander verschoben werden können. Vorzugsweise entspricht eine Fläche des Rest-Überlappungsbereichs 18 in etwa der Hälfte der Fläche des Verriegelungs-Überlappungsbereichs 17. Anders ausgedrückt beträgt der Durchmesser d_{RÜ} vorzugsweise die Hälfte des Durchmessers d₁ des ersten Magnetelements 15 und des Durchmessers d₂ des zweiten Magnetelements 16. Der Durchmesser d_{VÜ} des Verriegelungs-Überlappungsbereichs 17 entspricht den Durchmessern d₁ und d₂.

Alternativ ist es auch möglich, bei ausreichender magnetischer Wechselwirkung der Magnetelemente 15, 16, dass sich die Magnetelemente 15, 16 in der Brillenglas-Freigabeposition nur noch in einem Bereich derer Aussenkanten überlappen, sodass die Magnetelemente 15, 16 in der Brillenglas-Freigabeposition quasi Kante an Kante aneinander anliegen.

In der Brillenglas-Freigabeposition übt das zweite Magnetelement 16 des Verriegelungs-Gegenmittels 13 eine Rückstellkraft auf das erste Magnetelement 15 des Verriegelungsmittels 8 aus. Die Wechselwirkung zwischen dem ersten Magnetelement 15 und dem zweiten Magnetelement 16 ist ferner derart, dass das Verriegelungsmittel 8 ohne äußere Krafteinwirkung in der Brillenglas-Verriegelungsposition gehalten wird oder in die Brillenglas-Verriegelungsposition zurückgeführt wird. Das Halten in der Brillenglas-Verriegelungsposition bzw. das Zurückführen des Verriegelungsmittels 8 von der Brillenglas-Freigabeposition in die Brillenglas-Verriegelungsposition erfolgt in die Brillenglas-Verriegelungsposition erfolgt alleine durch die magnetische Wechselwirkung der Magnetelemente 15, 16.

Die Verlagerungsbewegungen des Verriegelungsmittels 8 sind entlang der Richtungspfeile 11, 12 vorzugsweise durch Aussenkanten 19, 20 der Aussparung 10 geführt. Die Aussenkanten 19, 20 bilden brillengestellseitige Führungsmittel. Durch diese brillengestellseitigen Führungsmittel 19, 20 ist eine lineare Bewegung entlang der Richtungspfeile 11, 12 geführt. Eine ungewollte Bewegung des Verriegelungsmittels 8 quer zu den Richtungspfeilen 11, 12 wird durch die brillengestellseitigen Führungsmittel 19, 20 wirkungsvoll verhindert. Die brillengestellseitigen Führungsmittel 19, 20 können auch als sich vom Brillengestellmittelteil 5 weg erstreckende Erhebungen ausgebildet sein.

Die Strecke der Verlagerungsbewegung entspricht vorzugsweise dem Durchmesser d_{RÜ} des Rest-Überlappungsbereich 18. Das Verriegelungsmittel 8 ist zusätzlich durch die magnetische Wechselwirkung zwischen den Magnetelementen 15, 16 sicher und stabil an dem Brillengestell 4 gehalten.

Im Folgenden wird exemplarisch das Auswechseln des zweiten Brillenglases 3 näher beschrieben, wobei insbesondere auf die Darstellungen gemäß Fig. 1, Fig. 2 und Fig. 4 Bezug genommen wird.

Zunächst ist das Verriegelungsmittel 8 durch den Benutzer aus der in Fig. 1 gezeigten Brillenglas-Verriegelungsposition in die in Fig. 2 gezeigte Brillenglas-Freigabeposition in Richtung des Richtungspfeils 11 zurückzuziehen. Hierbei überwindet das Verriegelungsmittel 8 mit dem ersten Magnetelement 15 die magnetische Anziehungskraft des zweiten Magnetelements 16 des Verriegelungs-Gegenmittels 13.

In der Brillenglas-Freigabeposition ist das Verriegelungsmittel 8 zunächst durch den Benutzer zu halten. Bedingt durch eine Einbauspannung des Brillenglases 3 in der Brillenglas-Verriegelungsposition hebt sich das Brillenglas 3 in einem dem Verriegelungsmittel 8 benachbarten Randbereich vom Brillengestellmittelteil 5 aus der Brillenglasausnehmung 14 ab, was in Fig. 2 durch den Richtungspfeil 21 dargestellt ist. Der Benutzer kann das Brillenglas 3 dann aus dem Brillengestell 4 entnehmen und anschließend ein anderes Brillenglas 3, mit zum Beispiel einer anderen Tönung, bzw. ein unbeschädigtes Brillenglas 3 in das Brillengestellmittelteil 5 einsetzen, sodass dieses in der Brillengestell-Freigabeposition nach Fig. 2 vorliegt.

Im Anschluss daran ist das neu eingesetzte Brillenglas 3 durch den Benutzer an dem Randbereich, der dem Verriegelungsmittel 8 benachbart ist, in Richtung des Brillengestellmittelteils 5 zu drücken, bis das Brillenglas 3 vollständig am Brillengestellmittelteil 5 anliegt. In dieser Stellung des Brillenglases 3 lässt der Benutzer das Verriegelungsmittel 8 los, wodurch dieses durch die magnetische Rückstellkraft zwischen den Magnetelementen 15, 16 von der Brillenglas-Freigabeposition in die Brillenglas-Verriegelungsposition von selbst und ohne Krafteinwirkung von Außen bewegt wird. Diese Bewegung ist durch den Richtungspfeil 12 in den Fig. 1 und Fig. 2 angedeutet.

Ein Auswechseln des ersten Brillenglases 2 erfolgt im Bedarfsfall auf die gleiche Art und Weise wie vorstehend in Bezug auf das zweite Brillenglas 3 beschrieben.

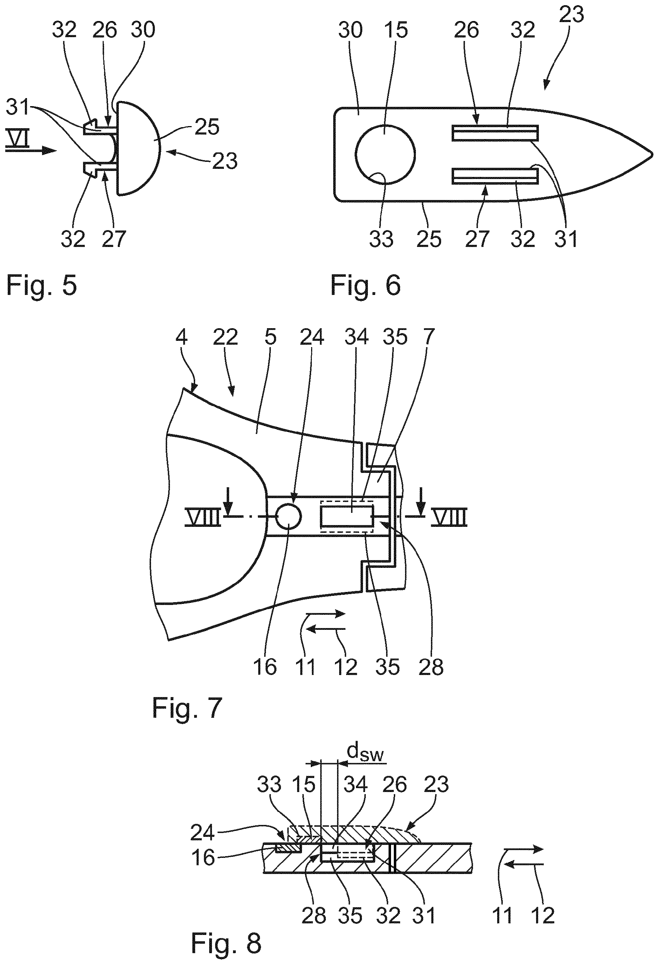

Fig. 5 bis Fig. 8 zeigen eine zweite Variante einer Brille 22 mit einer zweiten Ausführungsvariante eines Verriegelungsmittels 23 gemäß den Fig. 5 und Fig. 6 und einer zweiten Ausführungsvariante eines Verriegelungs-Gegenmittels 24 gemäß Fig. 7. Komponenten, die denjenigen entsprechen, die vorstehend schon unter Bezugnahme auf die Fig. 1 bis Fig. 4 erläutert wurden, tragen die gleichen Bezugsziffern und werden nicht nochmals im Einzelnen diskutiert.

Die Brille 22 unterscheidet sich von der Brille 1 durch die Ausgestaltung des Verriegelungsmittels 23 und des Verriegelungs-Gegenmittels 24. Gemäß der zweiten Ausführungsvariante der Brille 22 ist das Verriegelungsmittel 23 über eine Schnappverbindung mit dem Brillengestellmittelteil 5 des Brillengestells 4 verbindbar.

Das Verriegelungsmittel 23 ist in isolierter Ansicht in den Fig. 5 und Fig. 6 dargestellt. Ein Grundkörper 25 des Verriegelungsmittels 23 entspricht einem Grundkörper der ersten Ausführungsvariante des Verriegelungsmittels 8 gemäß den Fig. 1 und Fig. 2. An dem Grundkörper 25 sind Schnappmittel 26, 27 vorgesehen, die von dem Verriegelungsmittel 23 in Richtung Brillengestell 4 vorspringen und in eine zugeordnete Schnapp-Aufnahme 28 des Brillengestellmittelteils 5 eingreifen.

Die Schnappmittel 26, 27 sind an einer dem Brillengestell 4 zugewandten, planaren Oberfläche 30 des Grundkörpers 25 vorgesehen. Die Schnappmittel 26, 27 umfassen jeweils einen senkrecht von der Oberfläche 30 vorspringenden Stegabschnitt 31, welcher eine Längserstreckung senkrecht zur Oberfläche 30 aufweist. An den von der Oberfläche 30 abgewandten Endbereichen der Stegabschnitte 31 sind jeweils nasenartige Schnappvorsprünge 32 vorgesehen. Die Stegabschnitte 31 sind vorzugsweise aus einem flexiblen Material, vorteilhafterweise Kunststoff, ausgebildet. Die Stegabschnitte 31 sind dadurch unter einer Krafteinwirkung quer zu deren Längserstreckung biegbar.

Wie insbesondere Fig. 6 zu entnehmen, sind die Schnappmittel 26, 27 an der Oberfläche 30 beabstandet zu dem ersten Magnetelement 15 angeordnet. Das Magnetelement 15 ist in eine Ausnehmung 33 des Verriegelungsmittels 23 eingesetzt, vorzugsweise in die Ausnehmung 33 eingeklebt.

Wie insbesondere Fig. 7 zu entnehmen, umfasst das Verriegelungs-Gegenmittel 24 neben dem zweiten Magnetelement 16 die Schnapp-Aufnahme 28. Die Schnapp-Aufnahme 28 ist an die Abmessungen der Schnappmittel 26, 27 angepasst und weist eine stegartige Vertiefung 34 auf, welche sich in dem Brillengestellmittelteil 5 entlang der Richtungspfeile 11, 12 der Verlagerungsbewegung erstreckt. Abgewandt von dem Verriegelungsmittel 23 schließen sich an die stegartige Vertiefung 34 beabstandet voneinander zwei Schnapp-Nuten 35 an. Eine Kontur der Schnapp-Nuten 35 ist an eine Außenkontur der Schnappvorsprünge 32 angepasst.

In Fig. 8 ist das Verriegelungs-Gegenmittel 24 in einer Schnittdarstellung gemäß Schnittlinie VIII-VIII in Fig. 7 dargestellt. Im Unterschied zu Fig. 7 ist in Fig. 8 jedoch auch das Verriegelungsmittel 23 in der Brillenglas-Freigabeposition durch eine gestrichelte Linie angedeutet. Gemäß Fig. 8 greifen die Schnappmittel 26, 27, von denen in Fig. 8 nur das zweite Schnappmittel 27 dargestellt ist, in die stegartige Vertiefung 34 und die Schnapp-Nuten 35 ein.

Bei einer Montage des Verriegelungsmittels 23 an dem Brillengestellmittelteil 5 ist das Verriegelungsmittel 23 mit den Schnappmitteln 26, 27 voraus in die Schnappaufnahme 28 einzusetzen. Bei einem Einsetzen des Verriegelungsmittels 23 in die Schnappaufnahme 28 verbiegen sich die Stegabschnitte 31 zunächst durch Kontakt mit lateralen Außenwänden der Schnappaufnahme 28 leicht aufeinander zu. In der in Fig. 8 eingesetzten Position des Verriegelungsmittels 23 schnappen die Stegabschnitte 31 dann voneinander weg und die Schnappvorsprünge 32 untergreifen die stegartige Vertiefung 34 im Bereich der Schnapp-Nuten 35. Durch dieses Untergreifen wird ein ungewolltes Lösen des Verriegelungsmittels 23 von dem Brillengestell 4 vermieden. Eine Relativbewegung des Verriegelungsmittels 23 zu dem Brillengestellmittelteil 5 entlang der Richtungspfeile 11, 12 ist nach wie vor möglich. Hierzu ist die Dimensionierung der Schnappmittel 26, 27 und der Schnappaufnahme 28 entsprechend aufeinander abzustimmen. Die Schnappaufnahme 28 weist zu diesem Zweck entlang der Richtungspfeile 11, 12 eine größere Längserstreckung auf, als die Schnappmittel 26, 27. Eine Differenz zwischen der Längserstreckung der Schnappmittel 26, 27 und der Schnappaufnahme 28 entspricht einem Schiebeweg d_{SW} des Verriegelungsmittels 23.

Durch die beschriebene Schnappverbindung ist eine lineare Bewegung des Verriegelungsmittels 23 entlang der Richtungspfeile 11, 12 geführt. Eine ungewollte Bewegung des Verriegelungsmittels 23 quer zu den Richtungspfeilen 11, 12 wird durch die Schnappverbindung wirkungsvoll verhindert. Entsprechend zur ersten Ausführungsvariante übt in der Brillenglas-Freigabeposition das zweite Magnetelement 16 des Verriegelungs-Gegenmittels 24 eine Rückstellkraft auf das erste Magnetelement 15 des Verriegelungsmittels 23 aus.

In der alternativen Ausführungsvariante gemäß Fig. 5 bis Fig. 8 kann auf die Ausbildung von brillengestellseitigen Führungsmitteln in Form der Aussenkanten 19, 20 verzichtet werden, da gemäß der Ausführungsvariante nach den Fig. 5 bis Fig. 8 das Verriegelungsmittel 23 zum einen durch die magnetische Wechselwirkung der Magnetelemente 15, 16 und zum anderen durch die Schnappverbindung an dem Brillengestell 4 gehalten wird.

## Patentansprüche

1. Brille, insbesondere Sportbrille, mit
a) einem Brillengestell (4),
b) mindestens einem von dem Brillengestell (4) lösbar gehalterten Brillenglas (2, 3),
c) einem Verriegelungsmittel (8; 23) zum Halten des Brillenglases (2, 3) an dem Brillengestell (4), wobei das Verriegelungsmittel (8; 23)
- relativ zum Brillengestell (4) zwischen einer Brillenglas-Verriegelungsposition und einer Brillenglas-Freigabeposition verschiebbar ist,
- in der Brillenglas-Verriegelungsposition mit dem Brillenglas (2, 3) zusammenwirkt und das Brillenglas (2, 3) an dem Brillengestell (4) hält, und
- in der Brillenglas-Freigabeposition das Brillenglas (2, 3) derart freigibt, dass dieses aus dem Brillengestell (4) entnehmbar ist, und
d) einem mit dem Verriegelungsmittel (8; 23) zusammenwirkenden Verriegelungs-Gegenmittel (13; 24), welches an dem Brillengestell (4) angeordnet ist,
**dadurch gekennzeichnet, dass**
e) das Verriegelungsmittel (8; 23) und das Verriegelungs-Gegenmittel (13; 24) jeweils ein Magnetelement (15, 16) aufweisen, wobei das erste Magnetelement (15) des Verriegelungsmittels (8; 23) mit dem zweiten Magnetelement (16) des Verriegelungs-Gegenmittels (13) wechselwirkt, und
f) das erste Magnetelement (15) das zweite Magnetelement (16) in der Brillenglas-Freigabeposition in einem Rest-Überlappungsbereich (18) überlappt.

2. Brille nach Anspruch 1, **dadurch gekennzeichnet, dass** in der Brillenglas-Verriegelungsposition das Verriegelungsmittel (8; 23) das mindestens eine Brillenglas (2, 3) zusammenwirkend mit dem Brillengestell (4) formschlüssig hält.

3. Brille nach Anspruch 1 oder 2, **dadurch gekennzeichnet, dass** das Verriegelungsmittel (8; 23) und das Verriegelungs-Gegenmittel (13; 24) relativ zueinander verschiebbar sind.

4. Brille nach einem der vorstehenden Ansprüche, **dadurch gekennzeichnet, dass** das Verriegelungs-Gegenmittel (13; 24) fest an dem Brillengestell (4) angeordnet ist.

5. Brille nach einem der vorstehenden Ansprüche, **dadurch gekennzeichnet, dass** das erste Magnetelement (15) das zweite Magnetelement (16) in der Brillenglas-Verriegelungsposition zumindest bereichsweise in einem Verriegelungs-Überlappungsbereich (17) überlappt.

6. Brille nach einem der vorstehenden Ansprüche, **dadurch gekennzeichnet, dass** das zweite Magnetelement (16) in der Brillenglas-Freigabeposition eine Rückstellkraft auf das erste Magnetelement (15) ausübt.

7. Brille nach einem der vorstehenden Ansprüche, **dadurch gekennzeichnet, dass** die Wechselwirkung zwischen dem ersten Magnetelement (15) und dem zweiten Magnetelement (16) derart ist, dass das Verriegelungsmittel (8; 23) ohne äußere Krafteinwirkung in der Brillenglas-Verriegelungsposition gehalten wird oder in die Brillenglas-Verriegelungsposition zurückgeführt wird.

8. Brille nach einem der vorstehenden Ansprüche, **dadurch gekennzeichnet, dass** die Magnetelemente (15, 16) jeweils kreisförmig ausgebildet sind.

9. Brille nach einem der vorstehenden Ansprüche, **dadurch gekennzeichnet, dass** das eine lineare Bewegung des Verriegelungsmittels (8) entlang einer Verschieberichtung durch brillengestellseitige Führungsmittel (19, 20) geführt ist.

10. Brille nach einem der vorstehenden Ansprüche, **dadurch gekennzeichnet, dass** das Verriegelungsmittel (23) mittels einer Schnappverbindung an dem Brillengestell (4) gehalten ist, wobei die Schnappverbindung eine lineare Bewegung des Verriegelungsmittels (23) entlang einer Verschieberichtung zulässt.

11. Brille nach einem der vorstehenden Ansprüche, **dadurch gekennzeichnet, dass** zwei Brillengläser (2, 3) vorgesehen sind und jedem Brillenglas (2, 3) jeweils ein Verriegelungsmittel (8; 23) und eine Verriegelungs-Gegenmittel (13) zugeordnet ist.

12. Brille nach einem der vorstehenden Ansprüche, **dadurch gekennzeichnet, dass** das Brillengestell (4) ein Brillengestellmittelteil (5) und zwei Brillenbügel (6) umfasst, wobei jeweils ein Verriegelungsmittel (8; 23) beidseits seitlich des Brillengestellmittelteils (5) im Bereich eines Übergangs des Brillengestellmittelteils (5) hin zu einem Brillenbügel (6) angebracht sind.

## Claims

1. Spectacles, in particular sports spectacles, comprising
a) a spectacle frame (4);
b) at least one spectacle lens (2, 3) which is detachably locked by the spectacle frame (4);
c) a locking means (8; 23) for securing the spectacle lens (2, 3) to the spectacle frame (4), wherein the locking means (8; 23)
- is displaceable relative of the spectacle frame (4) between a spectacle lens locking position and a spectacle lens unlocking position;
- interacts with the spectacle lens (2, 3) in the spectacle lens locking position and retains the spectacle lens (2, 3) in the spectacle frame (4); and
- unlocks the spectacle lens (2, 3) in the spectacle lens unlocking position in such a way that the spectacle lens (2, 3) is removable from the spectacle frame (4); and
d) a locking counter-means (13; 24) interacting with the locking means (8; 23), wherein the locking counter means (13; 24) is arranged on the spectacle frame (4),
**characterised in that**
e) each of the locking means (8; 23) and the locking counter-means (13; 24) comprises a magnetic element (15, 16), wherein the first magnetic element (15) of the locking means (8; 23) interacts with the second magnetic element (16) of the locking counter-means (13), and
f) in the spectacle lens unlocking position, the first magnetic element (15) overlaps with the second magnetic element (16) in a remaining overlap region (18).

2. Spectacles according to claim 1, **characterised in that** in the spectacle lens locking position, the locking means (8, 23) interacts with the spectacle frame (4) in such a way that the at least one spectacle lens (2, 3) is positively locked.

3. Spectacles according to claim 1 or 2, **characterised in that** the locking means (8; 23) and the locking counter-means (13; 24) are displaceable relative to each other.

4. Spectacles according to any one of the preceding claims, **characterised in that** the locking counter-means (13; 24) is rigidly arranged on the spectacle frame (4).

5. Spectacles according to any one of the preceding claims, **characterised in that** in the spectacle lens locking position, the first magnetic element (15) overlaps with the second magnetic element (16) at least partly in a locking overlap region (17).

6. Spectacles according to any one of the preceding claims, **characterised in that** in the spectacle lens unlocking position, the second magnetic element (16) exerts a restoring force on the first magnetic element (15).

7. Spectacles according to any one of the preceding claims, **characterised in that** the interaction between the first magnetic element (15) and the second magnetic element (16) is such that the locking means (8; 23) is held in the spectacle lens locking position or reverts back to the spectacle lens locking position without requiring an external force.

8. Spectacles according to any one of the preceding claims, **characterised in that** the magnetic elements (15, 16) are in each case circular.

9. Spectacles according to any one of the preceding claims, **characterised in that** a linear movement of the locking means (8) is guided along a direction of displacement via spectacle-frame guide means (19, 20).

10. Spectacles according to any one of the preceding claims, **characterised in that** the locking means (23) is secured to the spectacle frame (4) by means of a snap-in connection, wherein the snap-in connection allows a linear movement of the locking means (23) along a direction of displacement.

11. Spectacles according to any one of the preceding claims, **characterised in that** two spectacle lenses (2, 3) are provided and each spectacle lens (2, 3) is allocated to in each case one locking means (8; 23) and one locking counter-means (13).

12. Spectacles according to any one of the preceding claims, **characterised in that** the spectacle frame (4) comprises one spectacle-frame central part (5) and two temples (6), wherein one locking means (8; 23) is in each case arranged on either side of the spectacle-frame central part (5) in the region of a transition of the spectacle-frame central part (5) towards a temple (6).

## Revendications

1. Lunettes, en particulier lunettes de sport, comprenant
a) une monture de lunettes (4),
b) au moins un verre de lunettes (2, 3) maintenu de manière à pouvoir être détaché de la monture de lunettes (4),
c) un moyen de verrouillage (8 ; 23) pour le maintien du verre de lunettes (2, 3) sur la monture de lunettes (4), dans lesquelles le moyen de verrouillage (8 ; 23)
- est mobile par rapport à la monture de lunettes (4) entre une position de verrouillage de verre de lunettes et une position de libération de verre de lunettes,
- dans la position de verrouillage du verre de lunettes, coopère avec le verre de lunettes (2, 3) et maintient le verre de lunettes (2, 3) sur la monture de lunettes (4), et
- dans la position de libération du verre de lunettes, libère le verre de lunettes (2, 3) de telle manière que ce dernier peut être retiré de la monture de lunettes (4), et
d) un moyen complémentaire de verrouillage (13 ; 24) qui coopère avec le moyen de verrouillage (8 ; 23) et qui est agencé sur la monture de lunettes (4),
**caractérisées en ce que**
e) le moyen de verrouillage (8 ; 23) et le moyen complémentaire de verrouillage (13 ; 24) présentent chacun un élément magnétique (15, 16), dans lesquelles le premier élément magnétique (15) du moyen de verrouillage (8 ; 23) se trouve en interaction avec le deuxième élément magnétique (16) du moyen complémentaire de verrouillage (13), et
f) dans la position de libération du verre de lunettes, le premier élément magnétique (15) chevauche le deuxième élément magnétique (16), dans une zone de chevauchement (18).

2. Lunettes selon la revendication 1, **caractérisées en ce que**, dans la position de verrouillage du verre de lunettes, le moyen de verrouillage (8 ; 23) maintient ledit au moins un verre de lunettes (2, 3) en coopération avec la monture de lunettes (4) par complémentarité de formes.

3. Lunettes selon la revendication 1 ou 2, **caractérisées en ce que** le moyen de verrouillage (8 ; 23) et le moyen complémentaire de verrouillage (13 ; 24) peuvent coulisser l'un par rapport à l'autre.

4. Lunettes selon l'une quelconque des revendications précédentes, **caractérisées en ce que** le moyen complémentaire de verrouillage (13 ; 24) est agencé fixement sur la monture de lunettes (4).

5. Lunettes selon l'une quelconque des revendications précédentes, **caractérisées en ce que**, dans la position de verrouillage du verre de lunettes, le premier élément magnétique (15) chevauche le deuxième élément magnétique (16) au moins par endroits dans une zone de chevauchement de verrouillage (17).

6. Lunettes selon l'une quelconque des revendications précédentes, **caractérisées en ce que** le deuxième élément magnétique (16), dans la position de libération du verre de lunettes, exerce une force de rappel sur le premier élément magnétique (15).

7. Lunettes selon l'une quelconque des revendications précédentes, **caractérisées en ce que** l'interaction entre le premier élément magnétique (15) et le deuxième élément magnétique (16) est telle que le moyen de verrouillage (8 ; 23) est maintenu dans la position de verrouillage du verre de lunettes ou ramené dans la position de verrouillage du verre de lunettes sans application d'une force extérieure.

8. Lunettes selon l'une quelconque des revendications précédentes, **caractérisées en ce que** les éléments magnétiques (15, 16) sont respectivement circulaires.

9. Lunettes selon l'une quelconque des revendications précédentes, **caractérisées en ce qu'**un mouvement linéaire du moyen de verrouillage (8) est guidé le long d'une direction de coulissement par des moyens de guidage (19, 20) côté monture de lunettes.

10. Lunettes selon l'une quelconque des revendications précédentes, **caractérisées en ce que** le moyen de verrouillage (23) est maintenu sur la monture de lunettes (4) au moyen d'un système de liaison par encliquetage, dans lesquelles le système de liaison par encliquetage autorise un mouvement linéaire du moyen de verrouillage (23) le long d'une direction de coulissement.

11. Lunettes selon l'une quelconque des revendications précédentes, **caractérisées en ce que** deux verres de lunettes (2, 3) sont prévus et respectivement un moyen de verrouillage (8 ; 23) et un moyen de verrouillage complémentaire (13) sont associés à chaque verre de lunettes (2, 3).

12. Lunettes selon l'une quelconque des revendications précédentes, **caractérisées en ce que** la monture de lunettes (4) comporte une partie centrale (5) et deux branches de lunettes (6), dans lesquelles respectivement un moyen de verrouillage (8 ; 23) est fixé latéralement de part et d'autre de la partie centrale (5) de la monture de lunettes dans la zone d'un passage de la partie centrale (5) de la monture de lunettes à une branche de lunettes (6).
